(19) Europäisches Patentamt
European Patent Office
Office européen des brevets

(11) **EP 4 147 810 A1**

(12) **EUROPEAN PATENT APPLICATION**
published in accordance with Art. 153(4) EPC

(43) Date of publication:
**15.03.2023 Bulletin 2023/11**

(51) International Patent Classification (IPC):
**B23B 35/00** (2006.01)   **C09J 201/00** (2006.01)
**C09J 7/24** (2018.01)   **C09J 7/25** (2018.01)
**C09J 7/38** (2018.01)

(21) Application number: **21799824.4**

(22) Date of filing: **01.04.2021**

(52) Cooperative Patent Classification (CPC):
**B23B 35/00; C09J 7/24; C09J 7/25; C09J 7/38;**
**C09J 201/00**

(86) International application number:
**PCT/JP2021/014217**

(87) International publication number:
**WO 2021/225052 (11.11.2021 Gazette 2021/45)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **08.05.2020 JP 2020082699**

(71) Applicant: **MITSUBISHI GAS CHEMICAL**
**COMPANY, INC.**
**Chiyoda-ku**
**Tokyo 100-8324 (JP)**

(72) Inventors:
• **YOKOSUKA, Ryota**
  **Tokyo 125-8601 (JP)**
• **NONAKA, Hiroyuki**
  **Tokyo 125-8601 (JP)**
• **SOUTOME, Hiroki**
  **Kanagawa 230-0038 (JP)**

(74) Representative: **Hoffmann Eitle**
**Patent- und Rechtsanwälte PartmbB**
**Arabellastraße 30**
**81925 München (DE)**

(54) **SUPPORT MATERIAL FOR PROCESSING FIBER-REINFORCED COMPOSITE MATERIALS, AND MACHINING METHOD**

(57)   An auxiliary material for fiber-reinforced composite material processing having a supporting material and an adhesive layer disposed on the supporting material, in which an elastic modulus at 23°C of the supporting material is 0.1 to 30 GPa.

[Figure 1]

EP 4 147 810 A1

**Description**

Technical Field

The present invention relates to an auxiliary material for fiber-reinforced composite material processing and a machining method.

Background Art

Fiber-reinforced composite materials, one representative being fiber-reinforced plastics (FRP), have a high tensile strength, a high tensile elastic force and a small density compared with stainless steel (SUS) materials and thus have tended to be frequently used as outer plates for aircrafts or vehicles and the like in recent years. Here, the fiber-reinforced composite material refers to a plastic obtained by performing heat forming or heat-pressure forming on a prepreg obtained by impregnating a resin with a matrix resin or stacking two or more prepregs.

This fiber-reinforced composite material is fixed to structures using fastener elements such as bolts or rivets. Therefore, when the fiber-reinforced composite material is fixed to a structure such as an aircraft component, a machining process, in particular, a machining process for making a number of holes for passing fastener elements in the fiber-reinforced composite material becomes necessary.

In order to obtain high-quality holes in the machining process of fiber-reinforced plastics (FRP), several techniques have been already proposed. For example, a method by which the shape of a tool, for example, the curvature or tip angle of a rake face of a drill is changed stepwise is exemplified (for example, refer to Patent Literature 1).

Citation List

Patent Literature

Patent Literature 1: Japanese Patent Laid-Open No. 2012-210689

Summary of Invention

Technical Problem

The machining process of a fiber-reinforced composite material is normally performed using a drill. In such a machining process, a problem is that a part of fibers that form the fiber-reinforced composite material are not cut and remain as uncut parts around processed holes. In addition, another problem is that delamination between the stacked prepregs that form the fiber-reinforced composite material as described above (hereinafter, referred to as "delamination") occurs.

Regarding this point, improvement in the processability of fiber-reinforced composite materials (for example, CFRP), the machining process of which is difficult, has been studied from the viewpoint of tools as described in Patent Literature 1, but the effect cannot be said to be sufficient.

The present invention has been made in consideration of the above-described problems, and an objective of the present invention is to provide an auxiliary material for fiber-reinforced composite material processing capable of reducing the uncut parts of fibers that occurs in the vicinity of a machined part or delamination in a machining process of a fiber-reinforced composite material and a machining method in which the auxiliary material for fiber-reinforced composite material processing is used.

Solution to Problem

The present inventors have performed intensive studies in order to solve the above-described problems. As a result, the present inventors have found that the use of an auxiliary material for fiber-reinforced composite material processing including a supporting material having a predetermined elastic modulus makes it possible to solve the above-described problems and have completed the present invention.

That is, the present invention is as described below.

[1] An auxiliary material for fiber-reinforced composite material processing having

a supporting material and
an adhesive layer disposed on the supporting material,

in which an elastic modulus at 23°C of the supporting material is 0.1 to 30 GPa.

[2] The auxiliary material for fiber-reinforced composite material processing according to [1],

in which hardness at 23°C of the supporting material is
40 or more in terms of Shore D hardness,
130 or less in terms of Rockwell R hardness, or
130 or less in terms of Rockwell M hardness.

[3] The auxiliary material for fiber-reinforced composite material processing according to [1] or [2], in which the supporting material is a resin sheet.
[4] The auxiliary material for fiber-reinforced composite material processing according to any one of [1] to [3], in which the supporting material does not contain any inorganic components of carbon, molybdenum sulfide and tungsten sulfide.
[5] The auxiliary material for fiber-reinforced composite material processing according to any one of [1] to [4], in which a thickness of the supporting material is 100 to 10000 $\mu$m.
[6] The auxiliary material for fiber-reinforced composite material processing according to any one of [1] to [5], in which the adhesive layer contains at least one selected from the group consisting of an acrylic polymer, a urethane-based polymer, a vinyl acetate-based polymer, a vinyl chloride-based polymer, a polyester-based polymer, a rubber-based polymer, a silicone-based polymer and copolymers thereof.
[7] The auxiliary material for fiber-reinforced composite material processing according to any one of [1] to [6], in which the fiber-reinforced composite material contains a carbon fiber-reinforced plastic, a glass fiber-reinforced plastic, an aramid fiber-reinforced plastic or a Kevlar fiber-reinforced plastic.
[8] The auxiliary material for fiber-reinforced composite material processing according to any one of [1] to [7], in which the auxiliary material is used in a state of being attached to a part of a workpiece material that becomes an exit for a machining tool in a process of machining the workpiece material with the machining tool.
[9] A machining method having

a machining process step of machining a workpiece material with a machining tool to form a machined part having an exit and an entrance for the machining tool and
an attachment step of attaching the adhesive layer of the auxiliary material for fiber-reinforced composite material processing according to any one of [1] to [8] in advance to a part of the workpiece material that becomes the exit for the machining tool before the machining process step.

[10] The machining method according to [9], in which, in the machining process step, a hole is made by drilling using a drill as the machining tool.
[11] The machining method according to [10], in which, in the machining process step, a feed rate of the drill is 0.01 to 1.0 mm/rev.

Advantageous Effect of Invention

According to the present invention, it is possible to provide an auxiliary material for fiber-reinforced composite material processing capable of reducing the uncut parts of fibers that occurs in the vicinity of a machined part or delamination in a machining process of a fiber-reinforced composite material and a machining method in which the auxiliary material for fiber-reinforced composite material processing is used.

Brief Description of Drawings

[Figure 1] Figure 1 is a schematic view showing an aspect of a machining method of the present embodiment.
[Figure 2] Figure 2 is a conceptual view of an uncut fiber percentage.
[Figure 3] Figure 3 is a view showing a relationship between an elastic modulus and the uncut fiber percentage.
[Figure 4] Figure 4 is a conceptual view of an index $F_d$ value of delamination.
[Figure 5] Figure 5 is a view showing a relationship between the elastic modulus and the index $F_d$ value of delamination.

Description of Embodiments

Hereinafter, an embodiment of the present invention (hereinafter, referred to as "the present embodiment") will be described in detail, but the present invention is not limited thereto and can be modified in a variety of manners within the scope of the gist of the present invention.

[Auxiliary Material for Fiber-Reinforced Composite Material Processing]

An auxiliary material for fiber-reinforced composite material processing of the present embodiment (hereinafter, also simply referred to as "auxiliary material") has a supporting material and an adhesive layer disposed on the supporting material, and the elastic modulus at 23°C of the supporting material is 0.1 to 30 GPa.

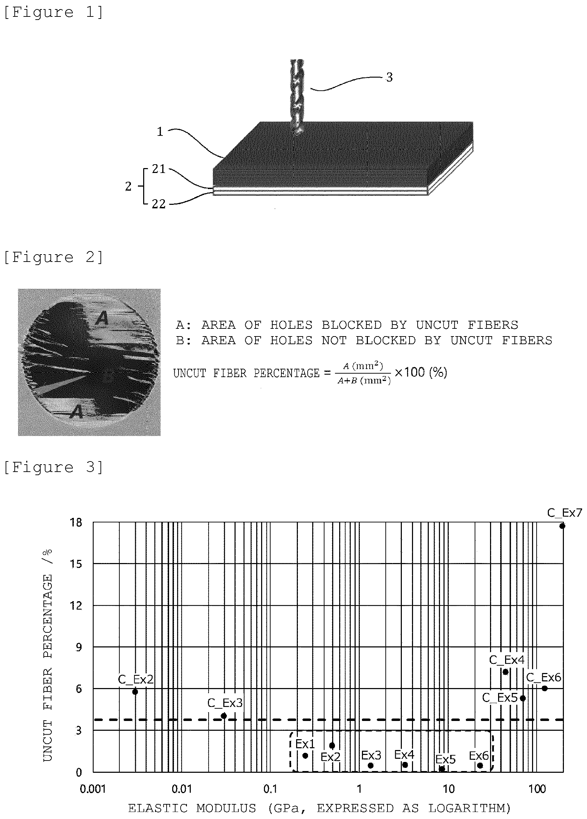

Figure 1 shows a schematic view representing an aspect of the auxiliary material of the present embodiment. As shown in Figure 1, an auxiliary material 2 of the present embodiment is a material that is used in the machining process of a fiber-reinforced composite material 1. More specifically, in the process of machining the fiber-reinforced composite material with a machining tool, a supporting material 22 is attached to a part of the fiber-reinforced composite material 1 that becomes an exit for a machining tool 3 through an adhesive layer 21, and the fiber-reinforced composite material 1 is processed using the machining tool 3 from the fiber-reinforced composite material 1 side.

When the tool tip begins to penetrate the lowest layer of the fiber-reinforced composite material, the fiber-reinforced composite material begins to tear in a direction parallel to fibers. When the tool gradually moves down, the fibers of the fiber-reinforced composite material are cut in the vicinities of the centers of holes and are cut in a direction perpendicular to the fibers. After that, as the tool further moves down, the holes are significantly pressed and widened, at this time, the fibers in a state of being cantilevered from the edges of the holes as fulcrums merely fall down in the rotation direction of the tool, are not cut and remain around the processed holes that become the exit for the machining tool (uncut parts of the fibers). In addition, when the tool tip penetrates in the thickness direction of the fiber-reinforced composite material, delamination occurs in the fiber-reinforced composite material.

In contrast, in the present embodiment, the fibers falling into a cantilevered state are suppressed by using the supporting material exhibiting a predetermined elastic modulus, which makes it possible to cleanly cut the fibers of the fiber-reinforced composite material along the edges of the holes. In addition, the fiber-reinforced composite material is supported from the bottom by the supporting material exhibiting a predetermined elastic modulus, which makes it possible to suppress delamination. As a result, it is possible to suppress the generation of uncut parts of the fibers compared with conventional methods, high-quality processed holes can be obtained, and it also becomes possible to suppress delamination. Particularly, regarding drilling, drilling that is excellent in terms of productivity and qualities compared with the related art becomes possible. The reasons for the uncut parts of the fibers or delamination to be suppressed by the auxiliary material of the present embodiment are not limited to the above description. Hereinafter, the configuration of the auxiliary material of the present embodiment will be described in more detail.

[Supporting Material]

The elastic modulus at 23°C of the supporting material is 0.1 to 30 GPa, preferably 0.7 to 25 GPa, more preferably 1.0 to 20 GPa and still more preferably 2.0 to 17 GPa. When the elastic modulus is 0.1 GPa or more, the uncut parts of the fibers or delamination is further suppressed. When the elastic modulus is 30 GPa or less, the flexure of the auxiliary material becomes easy, resulting in easier bonding and removal of the auxiliary material to and from the fiber-reinforced composite material.

For the same reason as for the elastic modulus, the hardness at 23°C of the supporting material may be further regulated. The standard of hardness representing the hardness can be selected as appropriate depending on the material or the hardness of the material.

For example, the Shore D hardness at 23°C of the supporting material is preferably 40 or more, more preferably 40 to 70 and still more preferably 40 to 60. The Rockwell R hardness at 23°C of the supporting material is preferably 130 or less, more preferably 70 to 130 and still more preferably 90 to 125. Furthermore, the Rockwell M hardness at 23°C of the supporting material is preferably 130 or less, more preferably 70 to 130 and still more preferably 90 to 125. When the hardness at 23°C of the supporting material is within the above-described range, there is a tendency that the uncut parts of the fiber or delamination is further suppressed, and bonding and removal of the auxiliary material to and from the fiber-reinforced composite material are easier.

The Shore D hardness can be measured in accordance with JIS Z 2246, and the Rockwell R and M hardness can be measured in accordance with JIS Z 2245. Which hardness standard to be used is not particularly limited, and each standard needs to be followed.

The thickness of the supporting material is preferably 100 to 10000 μm, more preferably 200 to 5000 μm and still more preferably 300 to 2500 μm. The use of the supporting material having such a thickness does not only improve the bonding and removal of the auxiliary material to and from the fiber-reinforced composite material, but also further improves the property of the auxiliary material restraining the fibers, and thus there is a tendency that the uncut parts of the fibers that are generated around the processed holes or delamination is further suppressed.

The supporting material is not particularly limited, and examples thereof include a polyolefin-based sheet such as polyethylene or polypropylene, a polyester-based sheet such as polyethylene terephthalate or polyethylene naphthalate and a resin sheet such as a vinyl chloride-based sheet, a polystyrene-based sheet or an acrylic sheet. These resin sheets are excellent in terms of formability and are suitable as the supporting material that forms the adhesive layer.

The supporting material preferably does not contain any inorganic components of carbon, molybdenum sulfide and tungsten sulfide. When the supporting material does not contain any inorganic components as described above, it is possible to suppress the wear of the blade edge of the machining tool.

[Adhesive Layer]

The configuration component of the adhesive layer is not particularly limited, and examples thereof include thermoplastic resins and/or thermosetting resins. The thermoplastic resins are not particularly limited, and examples thereof include at least one selected from the group consisting of an acrylic polymer, a urethane-based polymer, a vinyl acetate-based polymer, a vinyl chloride-based polymer, a polyester-based polymer, a rubber-based polymer, a silicone-based polymer and copolymers thereof. The thermosetting resins are not particularly limited, and examples thereof include resins such as a phenolic resin, an epoxy resin, a melamine resin, a urea resin, an unsaturated polyester resin, an alkyd resin, polyurethane, thermosetting polyimide and a cyanate resin.

Among these, the configuration component of the adhesive layer is preferably a thermoplastic resin, more preferably at least one selected from the group consisting of an acrylic polymer, a urethane-based polymer, a vinyl acetate-based polymer, a vinyl chloride-based polymer, a polyester-based polymer, a rubber-based polymer, a silicone-based polymer and copolymers thereof, more preferably an acrylic polymer or a rubber-based polymer and still more preferably an acrylic polymer. The use of such a thermoplastic resin further improves the attaching force of the supporting material to the fiber-reinforced composite material, and thus there is a tendency that the uncut parts of the fibers or delamination is further suppressed.

Generally, adhesive components can be roughly classified into an adhesive component that does not cause any chemical reaction in an adhesion process (hereinafter, also referred to as "FGA"), an adhesive component that causes a polymerization reaction (hereinafter, also referred to as "SGA") and an adhesive component that cures by energy irradiation such as ultraviolet rays (hereinafter, also referred to as "TGA"). The auxiliary material of the present embodiment is removed from the fiber-reinforced composite material after the machining process step. Therefore, the auxiliary material of the present embodiment does not need to strongly adhere to the fiber-reinforced composite material and, instead, desirably can be rapidly removed. From such a viewpoint, the configuration component that is used for the adhesive layer of the present embodiment is preferably the adhesive component (FGA) that does not cause any chemical reaction in the adhesion process.

As an example, the acrylic polymer, which corresponds to FGA, is not particularly limited, and examples thereof include copolymers of alkyl ester acrylate and a functional group-containing monomer such as a carboxyl group-containing acrylate, a hydroxy group-containing acrylate, an amino group-containing acrylate or a glycidyl group-containing acrylate. The attaching force of the supporting material to the fiber-reinforced composite material can be adjusted by appropriately adjusting the compositions of these monomers.

The adhesive force at 23°C of the adhesive layer to the fiber-reinforced composite material is preferably 0.5 N/20 mm or more, more preferably 1.0 N/20 mm or more, still more preferably 3.0 N/20 mm or more and far still more preferably 5.0 N/20 mm or more. The adhesive force at 23°C of the adhesive layer is preferably 30 N/20 mm or less, more preferably 25 N/20 mm or less, still more preferably 20 N/20 mm or less and far still more preferably 15 N/20 mm or less. When the adhesive force is 0.5 N/20 mm or more, there is a tendency that the uncut parts of the fibers or delamination is further suppressed. When the adhesive force is 30 N/20 mm or less, it is possible to rapidly remove the auxiliary material after the machining process step, and there is a tendency that the adhesive component remaining on the surface of the fiber-reinforced composite material is further suppressed.

The thickness of the adhesive layer is preferably 1 to 1000 $\mu$m, more preferably 5 to 500 $\mu$m and still more preferably 10 to 100 $\mu$m. When the thickness of the adhesive layer is within the above-described range, the uncut parts of the fibers are further suppressed, and there is a tendency that the adhesive property of the adhesive component to the surface of the fiber-reinforced composite material and the removability of the adhesive component from the surface of the fiber-reinforced composite material further improve.

[Other Configurations]

In the auxiliary material of the present embodiment, "the adhesive layer disposed on the supporting material" includes not only an adhesive layer directly disposed on the supporting material but also an adhesive layer indirectly disposed on the supporting material through a different layer.

The overall thickness of the auxiliary material of the present embodiment is 10 to 7500 $\mu$m, more preferably 15 to 2500 $\mu$m and still more preferably 20 to 1500 $\mu$m. The auxiliary material of the present embodiment preferably does not have, for example, any metal layers as a base material to be described below, the supporting material or other members. The auxiliary material of the present embodiment preferably does not contain any inorganic components such as carbon, molybdenum sulfide and tungsten sulfide as the adhesive layer or other members. When the auxiliary material does not contain any metal layers or inorganic components as described above, it is possible to suppress the wear of the blade edges of machining tools.

In the auxiliary material of the present embodiment, the adhesive layer may be indirectly formed on a supporting layer by bonding a double-sided tape having adhesive layers formed on the front and rear surfaces of the base material to the supporting layer. In such a case, the base material is a film material that serves as a base for forming the adhesive layer and is different from a supporting material that is mainly intended to impart mechanical characteristics such as stiffness to the auxiliary material. While not particularly limited, for example, the base material and the supporting material can be differentiated with the thickness due to the above-described difference in objective.

As an example, the thickness of the base material is preferably 10 to 150 $\mu$m, more preferably 10 to 125 $\mu$m and still more preferably 10 to 100 $\mu$m. The base material is not particularly limited, and examples thereof include a polyolefin-based film such as polyethylene or polypropylene, a polyester-based film such as polyethylene terephthalate or polyethylene naphthalate and a resin film such as a vinyl chloride-based film, a polystyrene-based film or an acrylic film. For the convenience, the base material will be referred to as the film, and the supporting material will be referred to as the sheet.

[Method for Manufacturing Auxiliary Material]

A method for manufacturing the auxiliary material of the present embodiment is not particularly limited, and examples thereof include a method having a step of forming the adhesive layer on the supporting material. A method for forming the adhesive layer is not particularly limited, and examples thereof include a method in which a solution containing an adhesive component is applied onto a supporting material and dried, a method in which a solution containing a monomer and a polymerization initiator is applied onto a supporting material and heated to make a polymerization reaction proceed, thereby forming an adhesive layer on the supporting material, and a method in which a double-sided tape having adhesive layers formed on the front and rear surfaces of a base material is bonded to a supporting material.

[Machining Method]

A machining method of the present embodiment has a machining process step of machining a fiber-reinforced composite material with a machining tool to form a machined part having the exit and the entrance for the machining tool and has, before the machining process step, an attachment step of attaching the adhesive layer of the auxiliary material in advance to a part of the fiber-reinforced composite material that becomes the exit for the machining tool. In this case, the auxiliary material 2 comes into contact with the machining tool 3 that has penetrated the fiber-reinforced composite material 1.

When the auxiliary material of the present embodiment is disposed on the part that becomes the exit for the machining tool and used, in the machining process of the fiber-reinforced composite material, it is possible to suppress the uncut parts of the fibers that are generated in the vicinity of the machined part. This makes it possible to obtain a higher-quality machined part than machined parts obtained by conventional methods.

Here, "the machining process" is not particularly limited as long as the process is a process for machining the fiber-reinforced composite material, and examples thereof include drilling, grooving, turning, and cutting. Among these, the auxiliary material of the present embodiment is suitable for drilling in which a drill is used.

"The machined part" refers to a space formed by removing a part of the fiber-reinforced composite material with the machining tool. "The vicinity of the machined part" is a concept indicating the machined part and the vicinity thereof and is a concept including a part of the fiber-reinforced composite material with which the machining tool has come into contact (the inner wall and the outer edge of the machined part) and a vicinity part that is affected by machining. For example, in a case where a hole (machined part) has been formed by drilling, the vicinity of the machined part includes the edge of the entrance and the edge of the exit of the hole. In a case where a groove has been formed by grooving, the vicinity of the machined part includes the edge of the groove. In a case where the surface of the fiber-reinforced composite material has been machined by turning, a part of the fiber-reinforced composite material with which the machining tool has come into contact is included.

Hereinafter, each step will be described in detail.

(Attachment Step)

The attachment step is a step of attaching the adhesive layer of the auxiliary material in advance to a part of the fiber-reinforced composite material that becomes the exit for the machining tool before the machining process step. The attachment site of the auxiliary material on the fiber-reinforced composite material is a part that becomes the exit for the machining tool in advance. This makes it possible to reduce the uncut parts of the fibers that are generated in the vicinity of the exit for the machining tool.

An attachment method is not particularly limited, and examples thereof include a method involving removing release paper bonded to the adhesive layer as necessary and bonding the adhesive layer and the surface of the fiber-reinforced composite material together.

(Machining Process Step)

The machining process step is a step of machining the fiber-reinforced composite material with the machining tool to form a machined part having the exit and the entrance for the machining tool. When the auxiliary material exhibiting a predetermined adhesive force even during the machining process is used as described above, the fibers in the fiber-reinforced composite material restrain the fibers falling into a state of being cantilevered from the edges of the holes as fulcrums, which makes it possible to cleanly cut the fibers of the fiber-reinforced composite material along the edges of the holes. This action principle is true throughout the entire machining tool.

A machining method is not particularly limited, and examples thereof include well-known conventional methods such as drilling, grooving, turning and cutting. The types of machining tools that are used in these machining processes are also not particularly limited, and it is possible to appropriately use a well-known machining tool suitable for the machining method.

Among those, in the machining process step, holes are preferably made by drilling using a drill as the machining tool. The diameter, material and shape of the drill to be used and the presence or absence of a surface coating are not particularly limited.

The diameter of the drill can be selected as appropriate depending on the use and is ordinarily 1 to 30 mm. Particularly, for the drilling use of base materials for aircrafts, the diameter is preferably 2 to 7 mm. From the viewpoint of forming larger processed holes, the diameter of the drill is preferably 3 mm or more, more preferably 5 mm or more, still more preferably 6 mm or more, far still more preferably 10 mm or more, even far still more preferably 12.5 mm or more and particularly preferably 15 mm or more. As the diameter of the drill becomes larger, it is more likely for the uncut parts of the fibers to be generated in the vicinity of the machined part, and thus the present invention is useful.

The material of the drill is preferably high-speed steel or cemented carbide that is made by sintering the powder of a hard metal carbide. Such cemented carbide is not particularly limited, and examples thereof include metals obtained by sintering a mixture of tungsten carbide and cobalt, which is a binding agent. To the cemented carbide, titanium carbide, tantalum carbide or the like may be added in order to further improve material characteristics depending on the intended use.

The shape of the drill can be selected as appropriate depending on the conditions of the drilling, the type or shape of the fiber-reinforced composite material or the like. The shape of the drill is not particularly limited, and examples thereof include the tip angle of the drill, the twist angle of a groove, and the number of cutting edges.

The surface coating of the drill can be selected as appropriate depending on the conditions of the drilling, the type or shape of the fiber-reinforced composite material or the like. Examples of a preferable type of surface coating include a diamond coating, a diamond-like coating, and a ceramic coating.

The feed rate of the drill is preferably 0.01 to 1.0 mm/rev, more preferably 0.05 to 0.8 mm/rev and still more preferably 0.1 to 0.6 mm/rev. When the feed rate of the drill is 0.01 mm/rev or faster, the process rate improves, but it is more likely for the uncut parts of the fibers to be generated, and thus the present invention becomes particularly useful.

In the machining process step, it is possible to use a technique in an ordinary machining process. For example, at the time of performing the machining process, the machining process may be performed while cooling a site under the machining process and/or the machining tool using a gas or a liquid. Examples of a method for cooling the site under the machining process and/or the machining tool using a gas include a method in which a compressed gas is supplied to the site under the machining process and/or the machining tool and a method in which a gas is supplied to the machining process site and/or the machining tool from the surrounding by suctioning gases in the vicinities of the site under the machining process and/or the machining tool.

Processes other than hold formation can also be performed in the same manner as described above. The tool and the method for performing the machining process are not particularly limited. Specific examples thereof include drilling in which a through hole or a non-through hole is formed with, instead of the drill, a router, a milling cutter, an end mill, a side cutter or the like, and processes in which the fiber-reinforced composite material is cut with a router, a pipe cutter, an end mill, a metal saw or the like. On the blade edge of the machining tool, a coating film of titanium, diamond, diamond-like carbon or the like may be formed in order to suppress the wear by increasing the hardness.

(Removal Step)

The machining method of the present embodiment may have a removal step of removing the auxiliary material from the fiber-reinforced composite material after the machining process step.

[Fiber-Reinforced Composite Material]

The auxiliary material of the present embodiment is used against fiber-reinforced composite materials composed of a matrix resin and reinforcement fibers.
The matrix resin is not particularly limited, and examples thereof include thermosetting resins such as an epoxy resin, a phenolic resin, a cyanate resin, a vinyl ester resin and an unsaturated polyester resin; and thermoplastic resins such as an acrylonitrile-butadienestyrene (ABS) resin, a polyamide (PA) resin, a polypropylene (PP) resin, a polycarbonate (PC) resin, a methyl methacrylate resin, polyethylene, acrylics and a polyester resin.
The reinforcement fiber is not particularly limited, and examples thereof include a glass fiber, a carbon fiber and an aramid fiber. The form of the reinforcement fiber is not particularly limited, and examples thereof include a filament, a toe, a cloth, a blade, a chop, a milled fiber, a felt mat, paper, and a prepreg.
Specific examples of such a fiber-reinforced composite material are not particularly limited, and include fiber-reinforced plastics (FRP) such as a carbon fiber-reinforced plastic (CFRP), a glass fiber-reinforced plastic (GFRP), an aramid fiber-reinforced plastic (AFRP) and a Kevlar fiber-reinforced plastic (KFRP). Among these, a carbon fiber-reinforced plastic (CFRP) having a relatively high tensile strength, a relatively high tensile elastic force and a relatively small density is preferable.
The fiber-reinforced composite materials may additionally contain an inorganic filler, an organic filler or the like as necessary. The fiber-reinforced plastics are a concept containing reinforcement fibers and a thermosetting resin and/or a thermoplastic resin, and, among these, fiber-reinforced composite materials containing reinforcement fibers and a thermoplastic resin are also referred to as fiber reinforced thermoplastics (FRTP). For example, fiber-reinforced composite materials containing carbon fibers and a thermoplastic resin are referred to as carbon fiber reinforced thermoplastics (CFRTP).

Examples

Hereinafter, the present invention will be described more specifically using examples and comparative examples. The present invention is not limited to the following examples by any means.
Table 1 shows a workpiece material (a material in which holes were formed and processed) used, an adhesive layer used, a sheet used as a supporting material, a drill bit used for hole formation, a hole-forming instrument and the specifications of a device used for evaluation in each of the examples and the comparative examples.

[Table 1]

| Classification | Title | Trade name/ model No. | Manufacturer | Note |
|---|---|---|---|---|
| Workpiece material | CFRP | Carbon fiber-reinforced plastic plate | TIP Composite Co., Ltd. | Thickness: 10 mm, Quasi-isotropic laminated aircraft use-equivalent material (UD material) |
| | GFRP | Glass fiber-reinforced plastic plate | - | Thickness: 10 mm, Quasi-isotropic laminated material (UD material) |

(continued)

| Classification | Title | Trade name/ model No. | Manufacturer | Note |
|---|---|---|---|---|
| Adhesive layer | Adhesive tape | No. 535A | Nitto Denko Corporation | Base material: Polyester film, thickness: 0.12 mm<br>Surface 1 (strong adhesive surface): Acrylic adhesive<br>Surface 2 (weak adhesive surface): Acrylic adhesive |
| | | VR-5300 | Nitto Denko Corporation | Base material: Polyester film, thickness: 0.14 mm<br>Surface 1: Special rubber-based adhesive<br>Surface 2: Special rubber-based adhesive |
| Supporting material | Amber color rubber sole | Amber color rubber sole | Hashimoto Corporation | Thickness: 2 mm |
| | EVA resin | EVA sheet | Sekisui Chemical Co., Ltd. | Thickness: 1 mm |
| | Polyethylene | Low-density polyethylene | Kenis, Ltd. | Thickness: 2 mm |
| | Polyethylene terephthalate (PTFE) | PTFE sheet | Sanplatec Co. Ltd. | Thickness: 0.5 mm |
| | Polypropylene | Polypropylene | - | Thickness: 2 mm |
| | Vinyl chloride | PVC plate | Hikari Group | Thickness: 2 mm |
| | Paper bake | Bakelite | - | Thickness: 2 mm |
| | GFRP | Glass fiber-reinforced plastic plate | - | Thickness: 2 mm |
| | Magnesium | Magnesium sheet | Iwata Mfg. Co., Ltd. | Thickness: 0.2 mm |
| | Aluminum | Aluminum sheet | Iwata Mfg. Co., Ltd. | Thickness: 0.15 mm |
| | Copper | Copper sheet | Iwata Mfg. Co., Ltd. | Thickness: 0.1 mm |
| | Stainless steel | SUS304 sheet | Iwata Mfg. Co., Ltd. | Thickness: 0.1 mm |
| Drill bit | Cemented carbide drill | RG-GDN | OSG Corporation | Diameter: 6.0 mm$\phi$<br>Tip angle: 120°<br>Twist angle: 40°<br>No solid drill, no coatinn |
| Drilling instrument | Machining center | VCN-535C | Yamazaki Mazak Corporation | - |

(continued)

| Classification | Title | Trade name/ model No. | Manufacturer | Note |
|---|---|---|---|---|
| Evaluation device | 3D measurement system | VR-5200 | Keyence Corporation | - |
| | Table-top type universal precision tester | AG-Xplus | Shimadzu Corporation | - |

[Example 1]

A 0.12 mm-thick acrylic double-sided tape (No. 535A, manufactured by Nitto Denko Corporation), which was to serve as an adhesive layer, was bonded to a single surface of the supporting material (2 mm low-density polyethylene) such that a strong adhesive surface side of the tape came into contact with the supporting material to produce an auxiliary material having the adhesive layer on the supporting material.

The surface of the adhesive layer of the auxiliary material obtained as described above was bonded to a part of the workpiece material that was to become the exit for a machining tool (cemented carbide drill) (exit part), and both were pressure-bonded by a method in which a 1 kg roller was made to reciprocate twice and left to stand at 23°C for approximately 15 hours.

After that, an adhesive tape and the workpiece material were fixed in a drilling instrument using a jig. In addition, drilling was performed using the drill bit from the surface of the workpiece material to which an auxiliary tape was not bonded to the surface to which an auxiliary tape was bonded to form 200 holes. A machining process with the cemented carbide drill (drilling) was performed under conditions shown in Table 2. The evaluation results of uncut fibers (uncut parts of the fibers) and delamination (fiber delamination) near a machined part on the drill bit exit side were shown in Table 2.

[Examples 2 to 8]

A 0.12 mm-thick acrylic double-sided tape (No. 535A, manufactured by Nitto Denko Corporation), which was to serve as an adhesive layer, was bonded to a single surface of a supporting material shown in Table 2 in the same manner as in Example 1 such that a strong adhesive surface side of the tape came into contact with the supporting material to produce an auxiliary material. In addition, as in Example 1, drilling was performed under conditions shown in Table 2, and a variety of evaluations were performed.

[Example 9]

A 0.14 mm-thick rubber-based double-sided tape (VR-5300, manufactured by Nitto Denko Corporation), which was to serve as an adhesive layer, was bonded to a single surface of a supporting material shown in Table 2 in the same manner as in Example 1 such that a strong adhesive surface side of the tape came into contact with the supporting material to produce an auxiliary material. In addition, as in Example 1, drilling was performed under conditions shown in Table 2, and a variety of evaluations were performed.

CFRP was used as the workpiece materials in Examples 1 to 7 and 9, and GFRP was used as the workpiece material in Example 8.

[Comparative Examples 1, 8 and 9]

No supporting material was used, a weak adhesive surface of an acrylic double-sided tape (No. 535A, manufactured by Nitto Denko Corporation) was bonded to a part of the workpiece material that was to become the exit for the machining tool (cemented carbide drill) (exit part), and the workpiece material was fixed in the drilling instrument with the jig. In addition, as in Example 1, drilling was performed under conditions shown in Table 2, and a variety of evaluations were performed.

[Comparative Examples 2 to 7]

A 0.12 mm-thick acrylic double-sided tape (No. 535A, manufactured by Nitto Denko Corporation), which was to serve as an adhesive layer, was bonded to a single surface of a supporting material shown in Table 2 in the same manner as in Example 1 such that a strong adhesive surface side of the tape came into contact with the supporting material to produce a machining process auxiliary material. In addition, as in Example 1, drilling was performed under conditions shown in Table 2, and a variety of evaluations were performed.

[Comparative Example 10]

No supporting material was used, an adhesive surface of a rubber-based double-sided tape (VR-5300, manufactured by Nitto Denko Corporation) was bonded to a part of the workpiece material that was to become the exit for the machining tool (cemented carbide drill) (exit part), and the workpiece material was fixed in the drilling instrument with the jig. In addition, as in Example 1, drilling was performed under conditions shown in Table 2, and a variety of evaluations were performed.

CFRP was used as the workpiece materials in Comparative Examples 1 to 8 and 10, and GFRP was used as the workpiece material in Comparative Example 9.

[Elastic Modulus]

The elastic moduli were measured using a table-top type universal tester (AG-Xplus, manufactured by Shimadzu Corporation) in accordance with JIS K 6251 for rubber materials, JIS K 7127, JIS K 7162 and JIS K 7164 for plastic materials and JIS Z 2241 for metal materials.

[Evaluation: Uncut Fiber]

In the examples and the comparative examples, the drill bit exit side of each through hole after the process was measured using a wide-area 3D measurement system (VR-5200, manufactured by Keyence Corporation), and the uncut fiber cross-sectional area in the vicinity of the processed hole on the drill bit exit side was calculated from the measured data using analysis software. The cross-sectional area of all of the processed holes was also calculated, and the percentage (%) of the uncut fiber cross-sectional area in the vicinity of the processed hole with respect to the cross-sectional area of all of the processed holes was also calculated. The drill bit exit sides were measured from the first hole to the 200th hole every 10 holes, and the results were shown in Table 2 as individual average values. The definition of the uncut fiber percentage will be described below, and a conceptual view thereof is shown in Figure 2. A view showing the relationship between the adhesive force and the uncut fiber percentage is shown in Figure 3. In Figure 3, Ex indicates the examples, and C_Ex indicates the comparative examples.

$$\text{Undercut fiber percentage (\%) = uncut fiber area/hole area} \times 100$$

Uncut fiber area (mm$^2$): Area of holes blocked by uncut fibers
Hole area (mm$^2$): Area of holes with assumption that there are no uncut fibers

[Evaluation: Delamination]

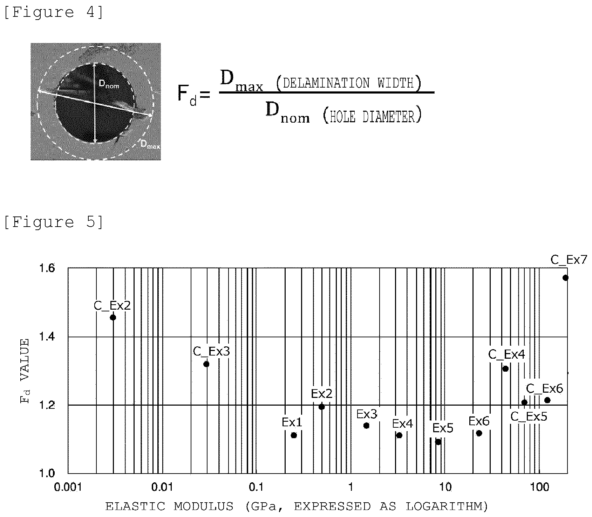

In Examples 1 to 11 and Comparative Examples 1 to 3, the drill bit exit side of each through hole after the process was measured using a wide-area 3D measurement system (VR-5200, manufactured by Keyence Corporation), and the maximum length of delamination in the vicinity of the processed hole on the drill bit exit side was measured from the measured data using analysis software. At this time, when the diameter of the processed hole is indicated by $D_{nom}$, the value of the diameter of the processed hole + the maximum length of delamination $\times$ 2 was indicated by $D_{max}$, and the $F_d$ value was calculated from the following formula. The drill bit exit sides were measured from the first hole to the 200th hole every 20 holes, and the results were shown in Table 2 as individual average values. A calculation conceptual view of the $F_d$ value is shown in Figure 4. A view showing the relationship between the elastic modulus and the $F_d$ value of delamination is shown in Figure 5. In Figure 5, Ex indicates the examples, and C_Ex indicates the comparative examples.

$$F_d \text{ value} = D_{max}/D_{nom}$$

[Table 2]

| | Supporting material | | | | Adhesive layer | Workpiece material | Process conditions | | Uncut fiber percentage [200-hole process average, %] | Delamination [200-hole process average, Fd] |
| --- | --- | --- | --- | --- | --- | --- | --- | --- | --- | --- |
| | Type | Elastic modulus [GPa] | Thickness [μm] | Hardness | | | Machining rate [m/min] | Feed rate [mm/rev] | | |
| Comparative Example 1 | - | - | - | - | No. 535A | CFRP | 100 | 0.15 | 3.7 | 1.29 |
| Comparative Example 2 | Amber color rubber sole | $3 \times 10^{-3}$ | 2000 | 47 (Shore A) | No. 535A | CFRP | 100 | 0.15 | 5.8 | 1.46 |
| Comparative Example 3 | EVA resin | 0.03 | 1000 | 17 to 38 (Shore D) | No. 535A | CFRP | 100 | 0.15 | 4.0 | 1.32 |
| Comparative Example 4 | Magnesium | 45 | 200 | - 46 (Vickers) | No. 535A | CFRP | 100 | 0.15 | 7.2 | 1.31 |
| Comparative Example 5 | Aluminum | 70 | 150 | 19 to 35 (Vickers) | No. 535A | CFRP | 100 | 0.15 | 5.3 | 1.21 |
| Comparative Example 6 | Copper | 125 | 100 | 48 to 64 (Vickers) | No. 535A | CFRP | 100 | 0.15 | 6 | 1.21 |
| Comparative Example 7 | SUS304 | 195 | 100 | - 200 (Vickers) | No. 535A | CFRP | 100 | 0.15 | 18 | 1.57 |
| Comparative Example 8 | - | - | - | - | No. 535A | CFRP | 100 | 0.30 | 2.0 | 1.32 |
| Comparative Example 9 | - | - | - | - | No. 535A | GFRP | 75 | 0.05 | 5.0 | 1.10 |
| Comparative Example 10 | - | - | - | - | VR-5300 | CFRP | 100 | 0.15 | 1.2 | 1.26 |
| Example 1 | Polyethylene | 0.3 | 2000 | 41 to 46 (Shore D) | No. 535A | CFRP | 100 | 0.15 | 1.2 | 1.11 |
| Example 2 | PTFE | 0.5 | 500 | 50 to 55 (Shore D) | No. 535A | CFRP | 100 | 0.15 | 1.9 | 1.19 |
| Example 3 | Polypropylene | 1.4 | 2000 | 80 to 100 (Rockwell R) | No. 535A | CFRP | 100 | 0.15 | 0.47 | 1.13 |

(continued)

| | Supporting material | | | | Adhesive layer | Workpiece material | Process conditions | | Uncut fiber percentage [200-hole process average, %] | Delamination [200-hole process average, Fd] |
|---|---|---|---|---|---|---|---|---|---|---|
| | Type | Elastic modulus [GPa] | Thickness [μm] | Hardness | | | Machining rate [m/min] | Feed rate [mm/rev] | | |
| Example 4 | Vinyl chloride | 3.3 | 2000 | 115 to 120 (Rockwell R) | No. 535A | CFRP | 100 | 0.15 | 0.50 | 1.11 |
| Example 5 | Bakelite | 8.6 | 2000 | 100 to 110 (Rockwell M) | No. 535A | CFRP | 100 | 0.15 | 0.22 | 1.09 |
| Example 6 | GFRP | 24 | 2000 | 100 to 110 (Rockwell M) | No. 535A | CFRP | 100 | 0.15 | 0.45 | 1.12 |
| Example 7 | Vinyl chloride | 3.3 | 2000 | 115 to 120 (Rockwell R) | No. 535A | CFRP | 100 | 0.30 | 0.29 | 1.13 |
| Example 8 | Vinyl chloride | 3.3 | 2000 | 115 to 120 (Rockwell R) | No. 535A | GFRP | 75 | 0.05 | 0.56 | 1.03 |
| Example 9 | Vinyl chloride | 3.3 | 2000 | 115 to 120 (Rockwell R) | VR-5300 | CFRP | 100 | 0.15 | 0.44 | 1.13 |
| *For hardness, catalog values were employed. | | | | | | | | | | |

Industrial Applicability

The auxiliary material for fiber-reinforced composite material processing of the present invention is industrially applicable as an auxiliary material that is used for the machining process of fiber-reinforced composite materials.

**Claims**

1. An auxiliary material for fiber-reinforced composite material processing comprising:

   a supporting material; and
   an adhesive layer disposed on the supporting material,
   wherein an elastic modulus at 23°C of the supporting material is 0.1 to 30 GPa.

2. The auxiliary material for fiber-reinforced composite material processing according to claim 1,
   wherein hardness at 23°C of the supporting material is

   40 or more in terms of Shore D hardness,
   130 or less in terms of Rockwell R hardness, or
   130 or less in terms of Rockwell M hardness.

3. The auxiliary material for fiber-reinforced composite material processing according to claim 1 or 2,
   wherein the supporting material is a resin sheet.

4. The auxiliary material for fiber-reinforced composite material processing according to any one of claims 1 to 3,
   wherein the supporting material does not contain any inorganic components of carbon, molybdenum sulfide and tungsten sulfide.

5. The auxiliary material for fiber-reinforced composite material processing according to any one of claims 1 to 4,
   wherein a thickness of the supporting material is 100 to 10000 μm.

6. The auxiliary material for fiber-reinforced composite material processing according to any one of claims 1 to 5,
   wherein the adhesive layer comprises at least one selected from the group consisting of an acrylic polymer, a urethane-based polymer, a vinyl acetate-based polymer, a vinyl chloride-based polymer, a polyester-based polymer, a rubber-based polymer, a silicone-based polymer and copolymers thereof.

7. The auxiliary material for fiber-reinforced composite material processing according to any one of claims 1 to 6,
   wherein the fiber-reinforced composite material comprises a carbon fiber-reinforced plastic, a glass fiber-reinforced plastic, an aramid fiber-reinforced plastic or a Kevlar fiber-reinforced plastic.

8. The auxiliary material for fiber-reinforced composite material processing according to any one of claims 1 to 7,
   wherein the auxiliary material is used in a state of being attached to a part of a workpiece material that becomes an exit for a machining tool in a process of machining the workpiece material with the machining tool.

9. A machining method comprising:

   a machining process step of machining a workpiece material with a machining tool to form a machined part having an exit and an entrance for the machining tool; and
   an attachment step of attaching the adhesive layer of the auxiliary material for fiber-reinforced composite material processing according to any one of claims 1 to 8 in advance to a part of the workpiece material that becomes the exit for the machining tool before the machining process step.

10. The machining method according to claim 9,
    wherein, in the machining process step, a hole is made by drilling using a drill as the machining tool.

11. The machining method according to claim 10,
    wherein, in the machining process step, a feed rate of the drill is 0.01 to 1.0 mm/rev.

[Figure 1]

[Figure 2]

A: AREA OF HOLES BLOCKED BY UNCUT FIBERS
B: AREA OF HOLES NOT BLOCKED BY UNCUT FIBERS

$$\text{UNCUT FIBER PERCENTAGE} = \frac{A\,(\text{mm}^2)}{A+B\,(\text{mm}^2)} \times 100\ (\%)$$

[Figure 3]

[Figure 4]

$$F_d = \frac{D_{max} \ (\text{DELAMINATION WIDTH})}{D_{nom} \ (\text{HOLE DIAMETER})}$$

[Figure 5]

## INTERNATIONAL SEARCH REPORT

| International application No. |
| --- |
| PCT/JP2021/014217 |

**A. CLASSIFICATION OF SUBJECT MATTER**
Int. Cl. B23B35/00(2006.01)i, C09J201/00(2006.01)i, C09J7/24(2018.01)i,
C09J7/25(2018.01)i, C09J7/38(2018.01)i
FI: C09J7/38, B23B35/00, C09J7/24, C09J7/25, C09J201/00
According to International Patent Classification (IPC) or to both national classification and IPC

**B. FIELDS SEARCHED**

Minimum documentation searched (classification system followed by classification symbols)
Int. Cl. B23B35/00, C09J201/00, C09J7/24, C09J7/25, C09J7/38

Documentation searched other than minimum documentation to the extent that such documents are included in the fields searched
Published examined utility model applications of Japan    1922-1996
Published unexamined utility model applications of Japan    1971-2021
Registered utility model specifications of Japan    1996-2021
Published registered utility model applications of Japan    1994-2021

Electronic data base consulted during the international search (name of data base and, where practicable, search terms used)
JSTPlus/JMEDPlus/JST7580 (JDreamIII);CAplus/REGISTRY (STN); Science Direct;
Japio-GPG/FX

**C. DOCUMENTS CONSIDERED TO BE RELEVANT**

| Category* | Citation of document, with indication, where appropriate, of the relevant passages | Relevant to claim No. |
| --- | --- | --- |
| X | WO 2017/022822 A1 (MITSUBISHI GAS CHEMICAL CO., INC.) 09 February 2017, claims 1, 13-15, paragraphs [0064], [0065], examples, tables 23-25, fig. 2 | 1-3, 5-11 |
| X | WO 2016/174713 A1 (TERAOKA SEISAKUSHO CO., LTD.) 03 November 2016, claims 1-8, examples 1-7, fig. 1 | 1-7 |
| A | JP 2017-127970 A (MITSUBISHI GAS CHEMICAL CO., INC.) 27 July 2017, examples | 1-11 |
| A | JP 2015-232108 A (NITTO DENKO CORP.) 24 December 2015, examples | 1-11 |

☒ Further documents are listed in the continuation of Box C.  ☒ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 09.06.2021 | 22.06.2021 |

| Name and mailing address of the ISA/ | Authorized officer |
| --- | --- |
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**

| International application No. |
| --- |
| PCT/JP2021/014217 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2012-45795 A (DAINIPPON PRINTING CO., LTD.) 08 March 2012, examples | 1-11 |
| A | JP 2010-106193 A (TOKYO INSTITUTE OF TECHNOLOGY) 13 May 2010, examples | 1-11 |
| A | US 2018/0282585 A1 (TESA SE) 04 October 2018, examples | 1-11 |

Form PCT/ISA/210 (continuation of second sheet) (January 2015)

INTERNATIONAL SEARCH REPORT

Information on patent family members

International application No.

PCT/JP2021/014217

| Patent Documents referred to in the Report | Publication Date | Patent Family | Publication Date |
|---|---|---|---|
| WO 2017/022822 A1 | 09.02.2017 | US 2018/0229339 A1 claims 1, 13-15, paragraphs [0155], [0156], examples, tables 23-25, fig. 2 EP 3333245 A1 SG 11201710736X A CN 107922867 A KR 10-2018-0037922 A BR 112018001381 A KR 10-2019-0008444 A TW 201711791 A RU 2673474 C | |
| WO 2016/174713 A1 | 03.11.2016 | CN 107530918 A | |
| JP 2017-127970 A | 27.07.2017 | US 2016/0045961 A1 examples US 2019/0061017 A1 EP 2979832 A1 TW 201446397 A CN 105073355 A KR 10-2015-0133210 A RU 2015145744 A SG 112015068930 A BR 112015021661 A | |
| JP 2015-232108 A | 24.12.2015 | US 2016/0340562 A1 examples WO 2015/119229 A1 EP 3106499 A1 CN 105980508 A KR 10-2016-0119779 A | |
| JP 2012-45795 A | 08.03.2012 | (Family: none) | |
| JP 2010-106193 A | 13.05.2010 | (Family: none) | |
| US 2018/0282585 A1 | 04.10.2018 | WO 2017/042218 A1 EP 3347425 A1 DE 102015217301 A CN 108026417 A | |

Form PCT/ISA/210 (patent family annex) (January 2015)

**REFERENCES CITED IN THE DESCRIPTION**

**Patent documents cited in the description**

- JP 2012210689 A